# EUROPÄISCHE PATENTSCHRIFT

(11) **EP 4 263 924 B1**
(45) Veröffentlichungstag und Bekanntmachung des Hinweises auf die Patenterteilung: **17.09.2025**
(21) Anmeldenummer: 21830785.8
(22) Anmeldetag: 16.12.2021
(51) Int. Cl.: D01H 7/58

(54) **RING FÜR EINE RINGSPINN- ODER EINE RINGZWIRNMASCHINE**
RING FOR A RING-SPINNING OR RING-TWISTING MACHINE
ANNEAU POUR MÉTIER À FILER CONTINU À ANNEAUX OU RETORDEUSE À ANNEAUX

(30) Priorität: 21.12.2020 CH 16392020
(43) Veröffentlichungstag der Anmeldung: 25.10.2023
(73) Patentinhaber: Bräcker AG, 8330 Pfäffikon (CH)
(72) Erfinder: DIPPEL, Markus, 8330 Pfäffikon (CH); SANTNER, Robert, 4040 Linz (AT); MITTERHOFER, Hubert, 4040 Linz (AT); JUNGMAYR, Gerald, 4050 Traun (AT)
(74) Vertreter: Rieter
(86) Internationale Anmeldenummer: PCT/IB2021/061835
(87) Internationale Veröffentlichungsnummer: WO 2022/137039

(56) Entgegenhaltungen:
- EP-A1- 2 009 153
- WO-A2-2004/027129
- CN-A- 108 301 078
- JP-A- S61 152 835
- US-A- 5 740 666
- US-A1- 2019 127 892
- SILBER SIEGFRIED ET AL: "High-Speed Drive for Textile Rotor Spinning Applications", IEEE TRANSACTIONS ON INDUSTRIAL ELECTRONICS, IEEE SERVICE CENTER, PISCATAWAY, NJ, USA, vol. 61, no. 6, 1 June 2014 (2014-06-01), pages 2990 - 2997, XP011534991, ISSN: 0278-0046, [retrieved on 20131220], DOI: 10.1109/TIE.2013.2258308

## Beschreibung

Die Erfindung betrifft einen Ring für eine Ringspinn- oder eine Ringzwirnmaschine.

Ringe werden als Spinnringe in sogenannten Ringspinnmaschinen oder als Zwirnringe in sogenannten Zwirnmaschinen eingesetzt. Dabei wirken die Spinn- oder Zwirnringe mit aufgesetzten Ringläufern zusammen. Die Ringläufer rotieren, mitgeschleppt vom durch den Ringläufer gehaltenen Faden, mit hohen Geschwindigkeiten auf einer Oberseite der Spinnringe, der sogenannten Ringkrone, was zu hohen Belastungen an den Kontaktflächen zwischen dem Ringläufer und der Ringkrone der Spinnringe führt. Zur Befestigung der Spinn- oder Zwirnringe in der Maschine ist ein Steg vorgesehen, welcher in einem Fussflansch enden kann. Die Ringkrone wie auch der Fussflansch, oder bei fehlendem Fussflansch der Steg, werden in vielfältigen Ausführungen hergestellt, jeweils in Form und Geometrie angepasst an die Anforderungen der entsprechenden Maschine sowie einer vorgesehenen Konstruktion der Befestigung des Spinn- oder Zwirnringes. Der Spinnring wird in der Maschine in einem sogenannten Ringrahmen gehalten. In der Folge werden Spinnringe und Zwirnringe unter dem Begriff Spinnring zusammengefasst.

Im Betrieb erwärmen sich die Reibflächen zwischen dem Spinnring und dem Ringläufer und damit auch der Faden. Durch das schnelle Umlaufen des Ringläufers auf dem Spinnring können lokal Temperaturen von über 400°C auftreten, welche dem System Ringläufer - Spinnring betriebliche Grenzen setzen. Aufgrund dieser mechanischen Gegebenheiten können Drehzahlen der Ringläufer von mehr als 30'000 Umdrehungen pro Minute nicht überschritten werden ohne dass eine Schädigung des Ringläufers oder Fadens eintritt. Im Stand der Technik wurde versucht diesem Umstand abzuhelfen durch einen sich drehenden Spinnring. Durch den Einsatz eines sich drehenden Spinnrings verringert sich die Relativgeschwindigkeit zwischen dem Ringläufer und dem Spinnring und in der Folge kann die Drehzahl des Ringläufers gegenüber einem stehenden Spinnring erhöht werden, ohne dass die thermische Belastung des Systems Ringläufer - Spinnring zunimmt. Durch die Erhöhung der Drehzahl des Ringläufers kann auch die Produktion der Spinnmaschine entsprechend gesteigert werden.

Aus dem Stand der Technik sind verschiedene Ausführungen von Ringläufer - Spinnring Systemen mit drehenden Ringen bekannt. Beispielsweise beschreibt die CN 109 763 220 A einen Antrieb eines Spinnringes mit einem Hohlwellenmotor. Dabei ist die Hohlwelle des an der Ringbank befestigten Motors mit dem Spinnring drehfest verbunden. Der Ringläufer ist entweder frei auf der Ringkrone drehend oder an der Ringkrone ortsfest gehalten. Weiter offenbart das Gebrauchsmuster CN 208 266 341 U einen angetriebenen Spinnring, wobei der Spinnring mit dem Rotor des Elektromotors verbunden ist und der Stator des Elektromotors über ein Gehäuse des Elektromotors an der Ringbank befestigt ist. Die CN 108 301 078 A offenbart ein angetriebenes Ring-Läufer-System, welches einen "Hochgeschwindigkeitsbetrieb" der Spinnmaschine ermöglichen und durch Reduktion der Relativ-Geschwindigkeit zwischen Spinnring und Ringläufer die Lebensdauer des Ringläufers erhöhen soll. Eine Anordnung für das Ringläufer-Spinnring-System umfasst den Spinnring zur Lagerung des Ringläufers, wobei der Spinnring auf dem Rotor des Antriebs angebracht ist. Der Rotor ist mittels eines Kugellagers in einem äusseren Ring gehalten welcher auf der Ringbank befestigt ist.

Siegfried et al. (IEEE Transactions on Industrial Electronics 61 (6), 2990-2997, 2014) zeigt einen Hochgeschwindigkeitsantrieb mit reibungsfreiem Aufhängungssystem für eine Rotorspinneinheit. Um eine sehr hohe Lebensdauer zu erreichen, ist der Rotor mittels aktiver Magnetlager aufgehängt.

Die EP2009153A1 zeigt eine Vorrichtung für eine Ringspinn- oder Zwirnmaschine mit einem Fadenführungsring, der ein Fadenführelement zum Verdrehen und Umlenken eines laufenden Fadens aufweist sowie eine Aufnahmeeinheit an welcher der Fadenführungsring um eine vorgesehene Rotationsachse rotierbar angeordnet ist, wobei Krafterzeugungsmittel zur Beaufschlagung des Fadenführungsrings mit axialen Kräften vorgesehen sind.

Die WO2004/027129A2 zeigt ein Ringspinnsystem zur Herstellung von Garn, bei dem die Ringläuferanordnung durch einen einzigen rotierenden, schwebenden Ring ersetzt ist, der an seiner inneren Mittelfläche eine Öse aufweist,
Nachteilig an den bekannten Ausführungen von angetriebenen Spinnringen ist deren Lagerung. Zur Stabilisierung der Spinnringe in radialer Richtung werden jeweils Rollenlager oder rollenlagerähnliche Konstruktionen vorgesehen. Durch diese mechanische Lagerung werden wiederum eine Erwärmung sowie eine Begrenzung der Drehzahlen durch die mechanischen Eigenschaften der Partnerwerkstoffe im mechanischen Lager hervorgerufen.

Die Aufgabe der Erfindung ist es, einen angetriebenen Ring zu schaffen, bei welchem die Möglichkeit einer Drehzahlerhöhung nicht durch mechanische erzeugte Reibungswärme behindert wird.

Die Aufgabe wird gelöst durch die Merkmale im kennzeichnenden Teil des unabhängigen Anspruchs. Zur Lösung der Aufgabe wird ein neuartiger Antrieb eines Ringes für eine Ringspinn- oder eine Ringzwirnmaschine vorgeschlagen, mit einem elektrischen Antrieb mit einem Stator und einem Rotor mit einem Magneten, wobei der Ring eine Ringkrone zur Anlage eines Ringläufers und einen Verbindungsabschnitt umfasst und der Ring über den Verbindungsabschnitt drehfest mit dem Rotor des Antriebs verbunden ist. Der Antrieb weist ein Spulensystem zur Erzeugung eines Drehmoments und radialer Kräfte auf, wobei ein axialer Freiheitsgrad und beide Kippfreiheitsgrade des Rotors durch Reluktanzkräfte passiv stabilisiert sind und beide radialen Freiheitsgrade durch einen Regelkreis aktiv stabilisiert sind. Antriebe mit Spulensystemen welche die Erzeugung von Drehmomenten und radialen Kräften ermöglicht sind aus dem Stand der Technik bekannt und werden in der Literatur als lagerlose Motoren bezeichnet.

Der fest mit dem Rotor verbundene Magnet erzeugt ein Erregermagnetfeld. Durch dieses Magnetfeld werden bereits drei Freiheitsgrade passiv, d.h. ohne Bestromung der Spulen, stabilisiert: Dies sind der axiale Freiheitsgrad und die beiden KippFreiheitsgrade. Die beiden radialen Freiheitsgrade werden durch geeignete Bestromung der Statorspulen stabilisiert. Dabei wird die Bestromung in einer Regelung sowohl in Abhängigkeit der radialen Rotorposition als auch in Abhängigkeit des elektrischen Drehwinkels des Rotors angepasst. Die radiale Position (x- und y- Richtung) sowie der elektrische Drehwinkel des Rotors werden laufend durch Sensoren erfasst. In der Regelung werden die notwendigen Spulenströme ermittelt, um den Rotor in seine in der x-y-Ebene kräftefreie Lage zu bewegen. Der durch diese Regelung erzeugte Strom wird als Kraft-Strom-Komponente bezeichnet. Der Mittelwert der Kraft-Strom-Komponente liegt bei ca. 0 Ampere, da der Rotor durch die Regelung in seiner kräftefreien Lage gehalten wird. Neben der Kraft-Strom-Komponente werden die Spulen auch mit einer Drehmoment-Strom-Komponente beaufschlagt. Diese Strom-Komponente entspricht dem Strom, den auch ein Synchronmotor in seinem Betrieb verwendet. Deshalb sind auch alle aus dem Bereich der Synchronmotoren bekannten Ansteuerverfahren, wie beispielsweise Feldschwächung zur Erreichung von höheren Drehzahlen, beim lagerlosen Motor möglich.

Ein lagerloser Motor kann mit einer Strangzahl von kleiner oder gleich vier realisiert werden. Jeder Strang kann, wie in der Motorentechnik üblich, aus einer Serienschaltung und/oder Parallelschaltung von Spulen ausgeführt sein. Die einzelnen Spulen können sowohl konzentrisch um einen Polschuh angeordnet sein, es ist aber auch eine Ausführung als verteilte Wicklung möglich.

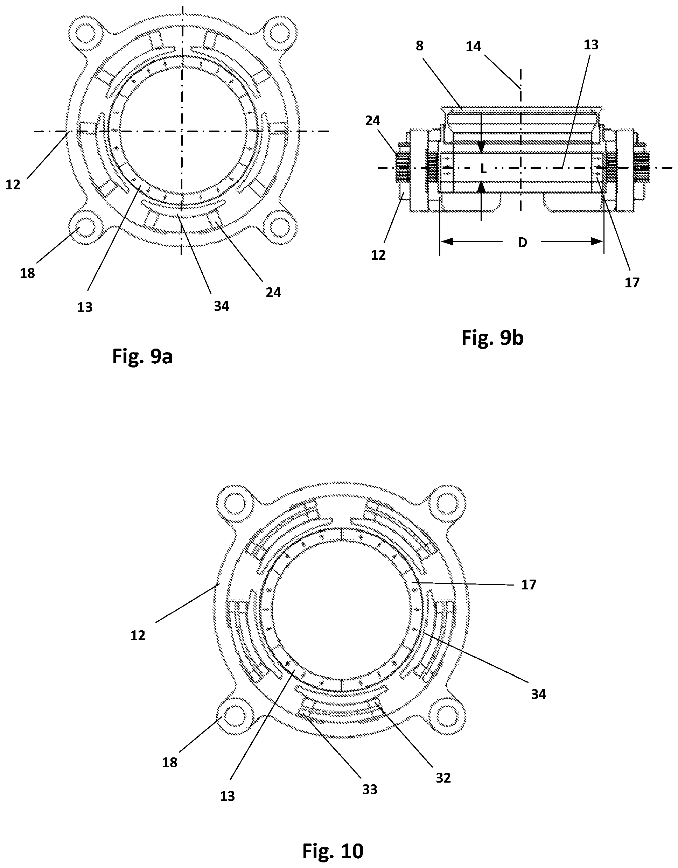

Eine Ausführung mit einer Strangzahl von 5 und 5 konzentrischen Spulen ist in der Figur 9 dargestellt. Jede Spule weist wie beschrieben zwei Stromkomponenten auf: eine Kraft-Strom-Komponente für die radiale Lagerung des Rotors und eine Drehmoment-Strom-Komponente für das Antreiben und Abbremsen des Rotors. In der Figur 10 ist eine alternative Ausführungsform dargestellt. Hier gibt es eine eigene Spule für die Kraft-Strom-Komponente und für die Drehmoment-Strom-Komponente. In Vergleich zu Figur 9 hat diese Ausführungsform den Nachteil, dass mehr elektronische Bauelemente (in der Regel Leistungshalbleiter) für die Ansteuerung der Spulen notwendig sind.

Vorteilhafterweise ist der Antrieb als lagerloser Scheibenläufer mit flachem Stator ausgebildet und ein Verhältnis einer axialen Länge des Magneten des Rotors zu einem Durchmesser des Magneten des Rotors ist kleiner als 0.4. Die Angabe von axialer Länge und Durchmesser bezieht sich dabei auf den Magneten des Rotors und nicht auf die äusseren Abmessungen eines gesamten Rotoraufbaus. Eine geometrische Größe, die in entscheidendem Maße Einfluss auf die passive Stabilität des Rotors nimmt, ist die axiale Länge bzw. vielmehr das Verhältnis von axialer Länge zum Durchmesser der Rotorscheibe respektive dessen Magneten. Da durch die Veränderung der axialen Länge auch der maximale magnetische Luftspaltfluss einer Polteilung verändert wird, hat eine Längenänderung auch Auswirkungen auf die aktiv stabilisierten Freiheitsgrade, also Tragkraft und Motormoment. Dabei werden nur die Amplituden von Kraft und Moment verändert, nicht deren Verlauf in Abhängigkeit vom Rotorwinkel. Aus diesem Grund muss eine Änderung der axialen Länge zwar bei der Auslegung von Lager und Motor bezüglich der Größe von erzielbarer Kraft und Moment berücksichtigt werden. In Bezug auf die passive Stabilisierung der Axial- und Kippbewegungen des Rotors beträgt ein zu bevorzugendes Verhältnis aus axialer Länge zum Durchmesser des Magneten des Rotors 0.3, oder als Kehrwert Durchmesser zu Länge angegeben 3.

In einer alternativen Ausführung zum lagerlosen Scheibenläufer mit flachem Stator ist der Antrieb als lagerloser Scheibenläufer mit einem Stator in Tempelbauform ausgebildet, wobei auch in dieser Ausführungsform ein Verhältnis einer axialen Länge des Magneten des Rotors zu einem Durchmesser des Magneten des Rotors kleiner als 0.4 ist. Auch in diesem Fall bezieht sich die Angabe von axialer Länge und Durchmesser auf den Magneten des Rotors und nicht auf die äusseren Abmessungen eines gesamten Rotoraufbaus. Die Vorteile eines Antriebs mit einem Stator in Tempelbauform sind darin zu sehen, dass der gesamte Antrieb einen geringeren Aussendurchmesser als der Scheibenläufer mit einem flachen Stator aufweist. Damit ist zwischen den einzelnen in einer Ringspinnmaschine eingesetzten Antrieben ein geringerer Platzbedarf notwendig, wodurch die Spinnstellen näher zusammengebaut werden können und beispielsweise bereits vorhandene Maschinen mit einem Ring nach der Erfindung einfach nachgerüstet werden können.

Bevorzugterweise ist der Ringläufer auf der Ringkrone frei beweglich zur Anlage vorgesehen. In dieser Ausführung wird der Ringläufer durch das Garn entlang der Ringkrone mitgeschleppt. Durch den angetriebenen Ring kann nun eine maximale Differenzgeschwindigkeit zwischen der Ringkrone und dem Ringläufer eingehalten werden obwohl der Ringläufer gegenüber der Ringbank mit einer weit höheren Geschwindigkeit als bei einem stehenden Ring betrieben werden kann.

In einer zu einem frei beweglichen Ringläufer alternativen Ausführungsform ist der Ringläufer auf der Ringkrone ortsfest zu Anlage vorgesehen. In dieser Ausführungsform wird der Ringläufer nicht durch das Garn unabhängig von einer Bewegung der Ringkrone mitgeschleppt. Die Drehung des Ringläufers wird allein durch die Drehung des Spinnringes und damit des Rotors des Antriebs bestimmt. In einer dabei bevorzugten Ausführung sind der Ringläufer und die Ringkrone einstückig ausgebildet.

Vorteilhafterweise kann ein zusätzliches aktives Magnetlager zur Stabilisierung des axialen Freiheitsgrades des Rotors vorgesehen werden. Durch ein aktives axiales Magnetlager können die für die Axialschwingung relevante Steifigkeit und Dämpfung angepasst werden. Dadurch kann die Stabilität der Axialschwingung erhöht werden, d.h. die maximale axiale Auslenkung des Rotors verringert werden. Zudem kann der Rotor auf bestimmten axialen Positionen gehalten werden. Das Magnetlager beinhaltet einen entsprechenden Sensor um die axiale Position aktiv regeln zu können.

Bevorzugterweise ist eine Dämpfung der Kippschwingungen mittels eines Kompensationsmittels vorgesehen, wobei das Kompensationsmittel zumindest eine von einer Wicklung getrennte elektrische Leiterschleife aufweist. Die Verwendung derartiger Kompensationsmittel sind aus der Offenbarung der EP 3 255 760 A1 bekannt. Dabei ist die von der Wicklung getrennte elektrische Leiterschleife einerseits in einer Referenzlage der Drehachse mit dem Erregermagnetfeld verkettungsfrei und andererseits in einer gegenüber der Referenzlage verkippten Istlage der Drehachse mit dem Erregermagnetfeld verkettet um der Verkippung entgegen zu wirken. Die Wirkungsweise entspricht der Wirkung eines elektrodynamischen Dämpfers mit dem besonderen Vorteil, dass die Dämpfungswirkung mit steigender Drehzahl zunimmt.

Vorteilhafterweise ist ein Notlauflager vorgesehen ist, wobei das Notlauflager aus zumindest einem am Stator befestigten Gleitring gebildet ist. Das Notlauflager ist aus einem Material mit Gleiteigenschaften, beispielsweise PTFE, gebildet und dient dazu den Rotor in der richtigen Position zu halten, wenn der Antrieb stromlos ist. Wirken auf den Rotor Kräfte, welche höher sind als die Kräfte der Magnetlagerung, sorgt das Notlauflager dafür, dass der Rotor innerhalb des Stators verbleibt. Aus diesem Grund ist es üblich, eine Notlauflager sowohl in radialer Richtung als auch in axialer Richtung vorzusehen. Bei Stromausfall wird der Gleichspannungszwischenkreis üblicherweise durch Rekuperation, d.h. gezielten Abbremsen des Rotors, weiterhin mit elektrischer Leistung versorgt, wodurch auch die aktive radiale Magnetlagerung weiterhin funktionstüchtig arbeiten kann. Fällt die Rotordrehzahl unter eine bestimmte Grenzdrehzahl ist keine Rekuperation mehr möglich und der Rotor fällt in das radiale Notlauflager.

Für einen Betrieb als lagerlosen Motor eignen sich nur bestimmte Kombinationen von magnetischer Polzahl des Magneten des Rotors und Strangzahl des Stators. Die Mindestanzahl von Strängen beträgt 4. Im Strangzahl-Bereich 4 bis 6 und Polbereich 2 - 10 sind folgende Ausführungsformen möglich:
- 4 Stränge / 4 Pole
- 5 Stränge / 2 Pole
- 5 Stränge / 6 Pole
- 4 Stränge / 4 Pole
- 6 Stränge / 2 Pole
- 6 Stränge / 6 Pole
- 6 Stränge / 8 Pole
Entspricht die Strangzahl der Polzahl so weist der Motor eine Einphasencharakteristik auf. Dies bedeutet, dass an bestimmten Drehwinkeln des Rotors das Motormoment zu Null wird. Diese Eigenschaft schließt aber nicht die Verwendung einer derartigen Topologie grundsätzlich aus.

Ist die Anzahl der Pole dividiert durch zwei eine gerade Zahl, ist das in EP 3 255 760 A1 beschriebene Kompensationsmittel nicht wirksam.

Es hat sich herausgestellt, dass es von Vorteil ist, wenn der Magnet des Rotors 6 Pole und der Stator 4 bis 6 Stränge aufweist. In einer alternativen Ausführungsform weist der Magnet des Rotors 4 Pole und der Stator 4 Stränge auf.

Weiter wird eine Ringspinnmaschine mit einer Ringbank vorgeschlagen mit zumindest einem an der Ringbank befestigten angetriebenen Ring nach obiger Beschreibung. Dabei wird der Stator an der Ringbank befestigt, beispielweise durch Klemmen oder Verschrauben. In der Ringbank ist entsprechend eine Öffnung für die Spindel vorgesehen welche konzentrisch mit der Öffnung des Rotors angelegt ist. Für eine exakte Positionierung des Antriebs respektive des Ringes können Lehren oder an der Ringbank angebrachte Positionierhilfen verwendet werden.

Vorteilhafterweise ist eine Dämpfung einer Lagerung des angetriebenen Ringes durch ein Dämpfungselement aus viskoelastischen Materialien in der Befestigung des Stators an der Ringbank vorgesehen. Die Anordnung einer Dämpfung in der Befestigung hat den Vorteil, dass einerseits Schwingungen des Rotors welche auf den Stator übertragen werden im Dämpfungselement in Wärme umgewandelt werden und andererseits externe Schwingungen nicht auf den Rotor übertragen werden. Typischerweise kommen hier Dämpfungselemente aus Butyl-basiertem Kautschuk zum Einsatz.

Ebenfalls ist eine Ringzwirnmaschine mit zumindest einem angeriebenen Ring nach obiger Beschreibung beansprucht.

Im Folgenden wird die Erfindung durch Zeichnungen näher erklärt, es zeigen:
- Figur 1: eine schematische Darstellung einer Ringspinnmaschine;
- Figur 2: eine schematische Darstellung eines angetriebenen Spinnringes nach der Erfindung in einer ersten Ausführungsform;
- Figur 3: eine schematische Schnittdarstellung an der Stelle X-X der Ausführungsform nach Figur 2;
- Figur 4: eine schematische Darstellung eines angetriebenen Spinnringes nach der Erfindung in einer zweiten Ausführungsform;
- Figur 5: eine schematische Darstellung einer Befestigung angetriebenen Spinnrings auf einer Ringbank;
- Figur 6a, 6b: eine schematische Darstellung eines Scheibenläufers mit flachem Stator in einer ersten Ausführungsform;
- Figur 7a, 7b: eine schematische Darstellung eines Scheibenläufers mit einem Stator in Tempelbauform;
- Figur 8: eine schematische Darstellung der Freiheitsgrade;
- Figur 9a, 9b: eine schematische Darstellung eines Scheibenläufers in einer zweiten Ausführungsform und
- Figur 10: eine schematische Darstellung eines Scheibenläufers in einer dritten Ausführungsform.

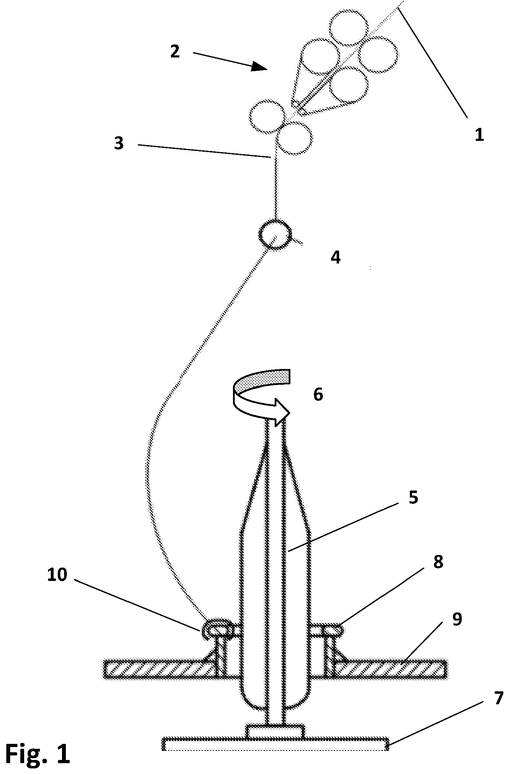

Figur 1 zeigt in schematischer Darstellung eine Spinnstelle einer Ringspinnmaschine, wobei heutige Ringspinnmaschinen bis zu 2'000 derartige Spinnstellen aufweisen. In der Ringspinnmaschine wird ein Faserverband, eine sogenannten Lunte 1, einem Streckwerk 2 zugeführt. Die Lunte 1 wird durch das Streckwerk 2 zu einem Faden 3 verstreckt. Das dargestellte Streckwerk 2 ist ein sogenanntes Riemchen-Streckwerk, welches üblicherweise für Baumwolle zum Einsatz kommt. Aus dem Stand der Technik sind je nach Anwendung vielerlei Bauarten von Streckwerken 2 bekannt. Der Faden 3 wird nach dem Streckwerk 2 über einen Fadenführer 4 zu einem Ringläufer 10 geführt. Nach dem Passieren des Ringläufers 10 wird der Faden 3 auf die Garnspule 5 aufgespult. Die Garnspule 5 wird durch einen Antrieb 7 in Drehung 6 versetzt. Durch diese Drehung 6 der Garnspule 5 wird durch den Faden 3 der Ringläufer 10 mitgenommen, was dazu führt, dass dem Faden 3 eine Drehung erteilt wird und somit das Garn gebildet wird. Dadurch, dass der Ringläufer 10 auf dem Spinnring 8 gehalten wird, wird der Ringläufer 10 gezwungen um die Garnspule 5 umzulaufen. Der Spinnring 8 ist ortsfest auf einem Ringrahmen 9 gehalten.

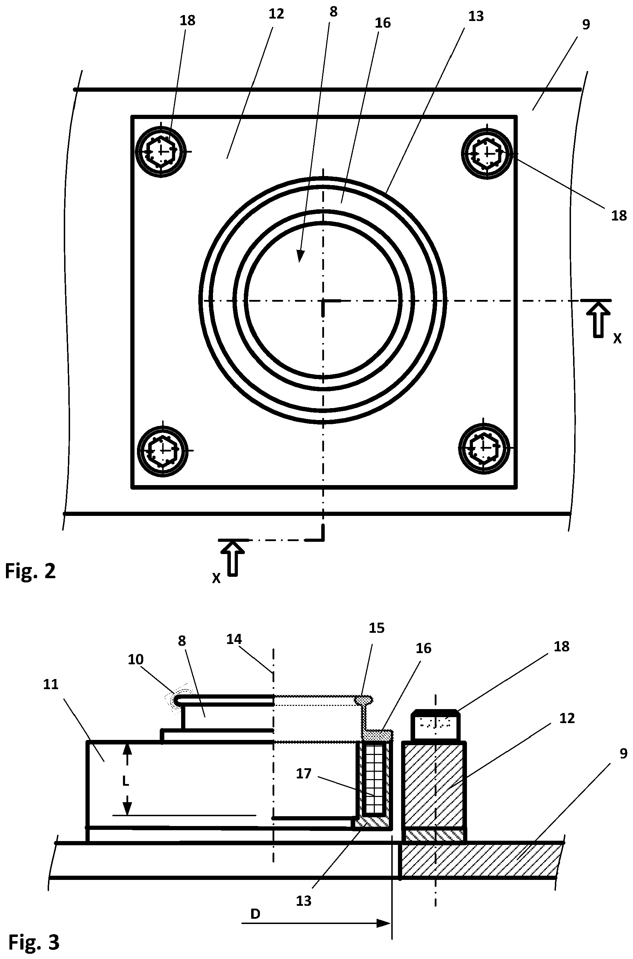

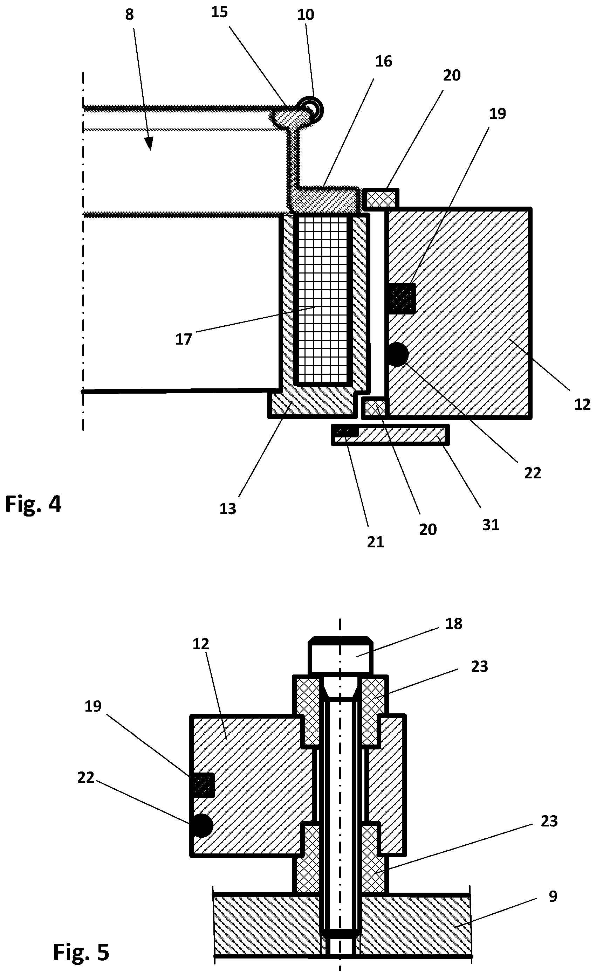

Figur 2 zeigt eine schematische Darstellung eines angetriebenen Ringes nach der Erfindung in einer ersten Ausführungsform in einer Draufsicht und Figur 3 zeigt eine schematische Schnittdarstellung an der Stelle X-X der Ausführungsform nach Figur 2. Mit einer Befestigung 18 ist auf einer Ringbank 9 der Stator 12 befestigt. Der beispielhaft gezeigte Stator 12 hat eine quadratische Form und ist in jeder seiner Ecken mit einer Befestigung 18 in Form einer Schraube auf der Ringbank 9 ortsfest gehalten. Eine mögliche Ausführungsform dieser Befestigung wird in Figur 5 gezeigt. Innerhalb des Stators 12 ist ein Rotor 13 angeordnet, wobei der Stator 12 zusammen mit dem Rotor 13 den Antrieb 11 bilden. Mit dem Rotor verbunden ist der Magnet 17. Der Rotor 13, respektive dessen Magnet 17 weist eine axiale Länge L und einen Durchmesser D auf. Der Magnet 17 weist eine Polzahl von beispielsweise 4, 6 oder 8 auf. Der Magnet 17 kann dabei als einzelner Ring oder aus Segmenten ausgeführt sein. Der Stator 12 und der Rotor 13 sind konzentrisch um eine Drehachse 14 des Spinnringes 8 angeordnet. Ebenfalls konzentrisch zum Antrieb 11 angeordnet ist ein Spinnring 8, dieser ist über einen Verbindungsabschnitt 16 am Rotor 13 ortsfest befestigt. Der Spinnring 8 weist eine Ringkrone 15 auf welcher ein Ringläufer 10 beweglich angelegt ist.

Figur 4 zeigt eine schematische Darstellung eines angetriebenen Ringes nach der Erfindung in einer zweiten Ausführungsform. Gezeigt sind der Rotor 13 mit Magneten 17 und der um den Rotor 13 angeordneten Stator 12. Auf dem Rotor aufgebaut ist ein Spinnring 8 mit einer Ringkrone 15 und einem Verbindungsabschnitt 16. Über den Verbindungsabschnitt 16 ist der Spinnring 8 ortsfest mit dem Rotor 13 verbunden. An der Ringkrone 15 ist ebenfalls ortsfest ein Ringläufer 10 befestigt. In der Folge wird der Rotor 13 in Drehung versetzt und der Spinnring 8 wie auch der daran befestigte Ringläufer 10 werden durch den Rotor 13 ebenfalls in Drehung versetzt. Im Gegensatz zur Darstellung in Figur 3 ist der Ringläufer 10 nicht frei auf der Ringkrone 15 beweglich sondern weist jederzeit dieselbe Drehzahl auf wie der Spinnring 8 respektive der Rotor 13.

Im Stator 12 eingebettet ist der Wegsensor 22 für die Regelung des aktiven radialen Magnetlagers. Ebenfalls am Stator 12 befestigt sind die Notlauflager 20 welche teilweise den Rotor 13 umgreifen und in Form von Ringen angelegt sind. Die Notlauflager 20 wirken in radialer wie auch in axialer Richtung. Weiter ist ein zusätzliches axiales Magnetlager 31 mit einem zugehörigen axialen Wegsensor 21 dargestellt. Im Stator 12 eingebettet ist ein Kompensationsmittel 19 in Form einer Leiterschlaufe.

Figur 5 zeigt eine schematische Darstellung einer Befestigung angetriebenen Ringes auf einer Ringbank 9. Dabei ist der mit einem Kompensationsmittel 19 und dem radialen Wegsensor 22 ausgestattete Stator 12 mit Durchtrittsöffnungen und die Ringbank 9 mit entsprechend angeordneten Innengewinden versehen. Die Durchtrittsöffnungen weisen an ihren beiden Enden einen vergrösserten Durchmesser zur Aufnahme von Dämpfungsmitteln 23 auf. Durch die Dämpfungsmittel 23 wird einerseits der Stator 12 von der Ringbank 9 und andererseits der Stator 12 von der Befestigung 18 entkoppelt. Die Befestigung 18 ist beispielhaft durch eine Schraube dargestellt, Bei einer Schraube in der gezeigten Ausführung ist es notwendig ein Dämpfungsmittel 23 an beiden Schraubenenden anzubringen, da ansonsten die Vibrationen von der Ringbank 9 über den Schraubenkörper auf den Stator 12 (oder umgekehrt) übertragen würden.

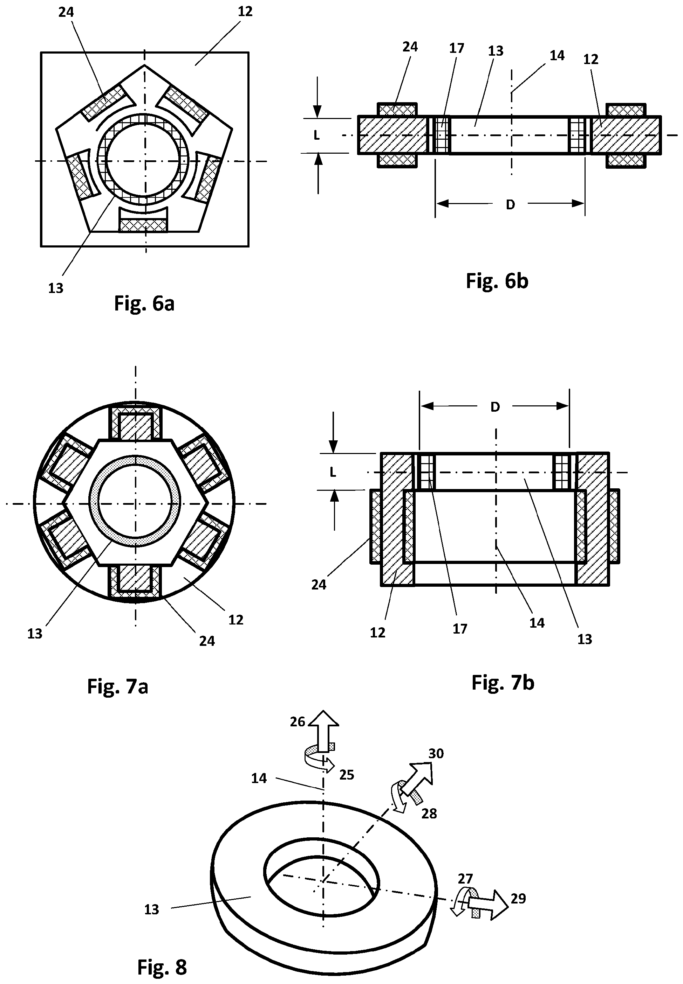

Die Figuren 6a und 6b zeigen eine schematische Darstellung eines sogenannten lagerlosen Scheibenläufers in einer ersten Ausführungsform. Dargestellt sind eine Draufsicht und ein Querschnitt des Scheibenläufers mit einem flachen Stator 12. Der Rotor 13 ist innerhalb des Stators 12 angeordnet und dessen Magnet 17 hat eine axiale Länge L und einen Durchmesser D. Rotor 13 und Stator 12 sind konzentrisch um die Drehachse 14 angeordnet. Am Rotor 13 sind schematisch die Magnete 17 dargestellt, wobei auf eine Darstellung der Polzahl verzichtet wurde. Der Stator 12 ist als ein Blechpaket mit dem Rotor 13 zugewandten Wicklungen 24 in fünf Strängen gezeigt.

Die Figuren 7a und 7b zeigen eine schematische Darstellung einen Scheibenläufer mit einem Stator 12 in Tempelbauform. Dargestellt sind eine Draufsicht und ein Querschnitt des Scheibenläufers. Die Bauart des Rotors 13 entspricht mit seinen Magneten 17 und dessen axialer Länge L und Durchmesser D dem Rotor 13 nach den Figuren 6a und 6b.

Auch in dieser Ausführung sind der Stator 12 und der Rotor 13 konzentrisch um die Drehachse 14 angeordnet. Das Blechpaket des Stators 12 ist jedoch mit einer grösseren axialen Ausdehnung als der Rotor 13 vorgesehen, sodass die Wicklungen 24, hier als sechs Stränge dargestellt, in einer axialen Verschiebung entlang der Drehachse 14 in Bezug auf den Rotor 13 angeordnet sind.

Figur 8 zeigt eine schematische Darstellung der Freiheitsgrade. Es ist der Rotor 13 der Einfachheit halber als zylindrischer Ring dargestellt. Eine Rotation des Rotors 13 erfolgt um die Drehachse 14, dabei ist der Dreh-Freiheitsgrad 25 angegeben. Für alle Richtungsangaben in Figur 8 gilt jedoch, dass in den Richtungsangaben auch die Angabe einer Gegenrichtung eingeschlossen ist. Weiter sind die beiden Kippfreiheitsgrade 27 und 28 sowie ein axialer Freiheitsgrad 26 und beide radiale Freiheitsgrade 29 und 30 angegeben.

Die Figuren 9a und 9b zeigen eine schematische Darstellung eines Scheibenläufers in einer zweiten Ausführungsform. Dargestellt sind eine Draufsicht und ein Querschnitt des Scheibenläufers. Der Rotor 13 ist innerhalb des Stators 12 angeordnet und dessen Magnet 17 hat eine axiale Länge L und einen Durchmesser D. Am Rotor 13 ist der Spinnring 8 befestigt. Rotor 13 und Stator 12 sind konzentrisch um die Drehachse 14 angeordnet. Am Stator 12 sind vier Befestigungen 18 vorgesehen. Am Rotor 13 sind schematisch die Magnete 17 dargestellt, wobei in der Draufsicht eine Polzahl von sechs Polen zu erkennen ist. Der Stator 12 ist mit fünf Zähnen 34 versehen auf welchen jeweils eine Wicklung 24 angebracht ist, wodurch sich fünf Stränge ergeben.

Die Figur 10 zeigt eine schematische Darstellung eines Scheibenläufers in einer dritten Ausführungsform in einer Draufsicht. Der Rotor 13 ist innerhalb des Stators 12 angeordnet. Rotor 13 und Stator 12 sind konzentrisch angeordnet. Am Stator 12 sind vier Befestigungen 18 vorgesehen. Am Rotor 13 sind schematisch die Magnete 17 dargestellt, wobei in der Draufsicht eine Polzahl von sechs Polen zu erkennen ist. Der Stator 12 ist mit fünf Zähnen 34 versehen, wodurch sich fünf Stränge ergeben. Auf den Zähnen sind jeweils die Wicklungen in Form von Spulen angebracht, wobei jede innere Spule am Zahn 34 als eine Radialkraft-Spule 32 und jede äussere Spule am Zahn 34 als eine Drehmoment-Spule 33 ausgebildet sind.

### Legende

- 1: Lunte
- 2: Streckwerk
- 3: Faden
- 4: Fadenführer
- 5: Garnspule
- 6: Drehung Garnspule
- 7: Antrieb
- 8: Spinnring
- 9: Ringrahmen
- 10: Ringläufer
- 11: Antrieb
- 12: Stator
- 13: Rotor
- 14: Drehachse Spinnring
- 15: Ringkrone
- 16: Verbindungsabschnitt
- 17: Magnet
- 18: Befestigung
- 19: Kompensationsmittel
- 20: Notlauflager
- 21: Wegsensor axial
- 22: Wegsensor radial
- 23: Dämpfungselement
- 24: Wicklung
- 25: Dreh-Freiheitsgrad
- 26: Axialer Freiheitsgrad
- 27: Kippfreiheitsgrad
- 28: Kippfreiheitsgrad
- 29: Radialer Freiheitsgrad
- 30: Radialer Freiheitsgrad
- 31: Axiales Magnetlager
- 32: Radialkraft-Spule
- 33: Drehmoment-Spule
- 34: Zahn des Stators
- D: Durchmesser Rotor
- L: Axiale Länge Rotor

## Patentansprüche

1. Angetriebener Ring für eine Ringspinn- oder eine Ringzwirnmaschine, mit einem elektrischen Antrieb (11) mit einem Stator (12) und einem Rotor (13) mit einem Magneten (17), wobei der Ring eine Ringkrone (15) zur Anlage eines Ringläufers (10) und einen Verbindungsabschnitt (16) umfasst und der Ring über den Verbindungsabschnitt (16) drehfest mit dem Rotor (13) des Antriebs (11) verbunden ist, **dadurch gekennzeichnet, dass** der Antrieb (11) ein Spulensystem zur Erzeugung eines Drehmoments und radialer Kräfte aufweist, wobei ein axialer Freiheitsgrad (26) und beide Kippfreiheitsgrade (27, 28) des Rotors (13) durch Reluktanzkräfte passiv stabilisiert sind und beide radialen Freiheitsgrade (29, 30) durch einen Regelkreis aktiv stabilisiert ist.

2. Ring nach Anspruch 1, **dadurch gekennzeichnet, dass** der Antrieb als lagerloser Scheibenläufer mit einem flachen Stator (12) ausgebildet ist und ein Verhältnis einer axialen Länge (L) des Magneten (17) zu einem Durchmesser (D) des Magneten (17) kleiner als 0.4 ist.

3. Ring nach Anspruch 1, **dadurch gekennzeichnet, dass** der Antrieb als lagerloser Scheibenläufer mit einem Stator (12) in einer Tempelbauform ausgebildet ist, wobei ein Verhältnis einer axialen Länge (L) des Magneten (17) zu einem Durchmesser (D) des Magneten (17) kleiner als 0.4 ist.

4. Ring nach einem der Ansprüche 1 bis 3, **dadurch gekennzeichnet, dass** der Ringläufer (10) auf der Ringkrone (15) frei beweglich zur Anlage vorgesehen ist.

5. Ring nach einem der Ansprüche 1 bis 3, **dadurch gekennzeichnet, dass** der Ringläufer (10) auf der Ringkrone (15) ortsfest zur Anlage vorgesehen ist.

6. Ring nach Anspruch 5, **dadurch gekennzeichnet, dass** der Ringläufer (10) und die Ringkrone (15) einstückig ausgebildet sind.

7. Ring nach einem der vorhergehenden Ansprüche, **dadurch gekennzeichnet, dass** ein zusätzliches aktives Magnetlager (31) zur Stabilisierung der axialen Freiheitsgrade (26) des Rotors (13) vorgesehen ist.

8. Ring nach einem der vorhergehenden Ansprüche, **dadurch gekennzeichnet, dass** eine Dämpfung der Kippschwingungen mittels eines Kompensationsmittels (19) vorgesehen ist, wobei das Kompensationsmittel (19) zumindest eine von einer Wicklung getrennte elektrische Leiterschleife aufweist.

9. Ring nach einem der vorhergehenden Ansprüche, **dadurch gekennzeichnet, dass** ein Notlauflager (20) vorgesehen ist, wobei das Notlauflager (20) aus zumindest einem am Stator (12) befestigten Gleitring gebildet ist.

10. Ring nach einem der vorhergehenden Ansprüche, **dadurch gekennzeichnet, dass** der Magnet (17) des Rotors (13) 6 Pole und der Stator (12) 5 Stränge aufweist.

11. Ring nach einem der Ansprüche 1 bis 8, **dadurch gekennzeichnet, dass** der Magnet (17) des Rotors (13) 6 Pole und der Stator (12) 4 bis 6 Stränge aufweist.

12. Ring nach einem der Ansprüche 1 bis 8, **dadurch gekennzeichnet, dass** der Magnet (17) des Rotors (13) 4 Pole und der Stator (12) 4 Stränge aufweist.

13. Ringspinnmaschine mit einer Ringbank (9) und zumindest einem an der Ringbank (9) befestigten angetriebenen Ring nach einem der vorhergehenden Ansprüche.

14. Ringspinnmaschine nach Anspruch 13, **dadurch gekennzeichnet, dass** eine Dämpfung einer Lagerung des angetriebenen Ringes durch ein Dämpfungselement (23) aus viskoelastischen Materialien in einer Befestigung (18) des Stators (12) an der Ringbank (9) vorgesehen ist.

15. Ringzwirnmaschine mit zumindest einem angetriebenen Ring nach einem der Ansprüche 1 bis 12.

## Claims

1. Driven ring for a ring-spinning or ring-twisting machine, comprising an electric drive (11) having a stator (12) and a rotor (13) with a magnet (17), the ring comprising a ring crown (15), for a ring traveler (10) to be mounted on, and a connecting portion (16) and the ring being rotationally fixedly connected to the rotor (13) of the drive (11) via the connecting portion (16), **characterized in that** the drive (11) has a coil system for generating a torque and radial forces, one axial degree of freedom (26) and both tilting degrees of freedom (27, 28) of the rotor (13) being passively stabilized by reluctance forces, and both radial degrees of freedom (29, 30) being actively stabilized by a control loop.

2. Ring according to claim 1, **characterized in that** the drive is designed as a bearingless disc armature having a flat stator (12) and a ratio of an axial length (L) of the magnet (17) to a diameter (D) of the magnet (17) is less than 0.4.

3. Ring according to claim 1, **characterized in that** the drive is designed as a bearingless disc armature having a stator (12) in a temple construction, a ratio of an axial length (L) of the magnet (17) to a diameter (D) of the magnet (17) being less than 0.4.

4. Ring according to any of claims 1 to 3, **characterized in that** the ring traveler (10) is provided to be mounted in a free-moving manner on the ring crown (15).

5. Ring according to any of claims 1 to 3, **characterized in that** the ring traveler (10) is provided to be mounted on the ring crown (15) in a stationary manner.

6. Ring according to claim 5, **characterized in that** the ring traveler (10) and the ring crown (15) are formed in one piece.

7. Ring according to any of the preceding claims, **characterized in that** an additional active magnetic bearing (31) is provided for stabilizing the axial degrees of freedom (26) of the rotor (13).

8. Ring according to any of the preceding claims, **characterized in that** damping of the tilting vibrations is provided by a compensation means (19), the compensation means (19) having at least one electrical conductor loop separated from a winding.

9. Ring according to any of the preceding claims, **characterized in that** an emergency bearing (20) is provided, the emergency bearing (20) being formed by at least one sliding ring fastened to the stator (12).

10. Ring according to any of the preceding claims, **characterized in that** the magnet (17) of the rotor (13) has 6 poles and the stator (12) has 5 winding strands.

11. Ring according to any of claims 1 to 8, **characterized in that** the magnet (17) of the rotor (13) has 6 poles and the stator (12) has 4 to 6 winding strands.

12. Ring according to any of claims 1 to 8, **characterized in that** the magnet (17) of the rotor (13) has 4 poles and the stator (12) has 4 winding strands.

13. Ring-spinning machine having a ring rail (9) and at least one driven ring according to any of the preceding claims fastened to the ring rail (9).

14. Ring-spinning machine according to claim 13, **characterized in that** damping of a bearing of the driven ring is provided by a damping element (23) made of viscoelastic materials in a fastening means (18) of the stator (12) on the ring rail (9).

15. Ring-twisting machine having at least one driven ring according to any of claims 1 to 12.

## Revendications

1. Anneau entraîné pour un métier à filer à anneaux ou un métier à retordre à anneaux, comportant un entraînement (11) électrique comportant un stator (12) et un rotor (13) comportant un aimant (17), dans lequel l'anneau comprend une couronne annulaire (15) pour un curseur annulaire (10) et une section de liaison (16) et l'anneau est relié de manière solidaire en rotation au rotor (13) de l'entraînement (11) par l'intermédiaire de la section de liaison (16),
**caractérisé en ce que** l'entraînement (11) présente un système de bobines pour générer un couple de rotation et des forces radiales, dans lequel un degré de liberté axial (26) et les deux degrés de liberté de relaxation (27, 28) du rotor (13) sont stabilisés de manière passive par des forces de réluctance et les deux degrés de liberté radiaux (29, 30) sont stabilisés de manière active par un circuit de régulation.

2. Anneau selon la revendication 1, **caractérisé en ce que** l'entraînement est réalisé sous forme de rotor à disque sans palier comportant un stator (12) plat et un rapport d'une longueur axiale (L) de l'aimant (17) au diamètre (D) de l'aimant (17) est inférieur à 0,4.

3. Anneau selon la revendication 1, **caractérisé en ce que** l'entraînement est réalisé sous forme de rotor à disque sans palier comportant un stator (12) dans une construction en forme de temple, dans lequel un rapport d'une longueur axiale (L) de l'aimant (17) au diamètre (D) de l'aimant (17) est inférieur à 0,4.

4. Anneau selon l'une des revendications 1 à 3, **caractérisé en ce que** le curseur annulaire (10) est prévu pour pouvoir se déplacer librement sur la couronne annulaire (15).

5. Anneau selon l'une des revendications 1 à 3, **caractérisé en ce que** le curseur annulaire (10) est monté sur la couronne annulaire (15) de manière stationnaire.

6. Anneau selon la revendication 5, **caractérisé en ce que** le curseur annulaire (10) et la couronne annulaire (15) sont réalisés d'une seule pièce.

7. Anneau selon l'une des revendications précédentes, **caractérisé en ce qu'**un palier magnétique (31) actif supplémentaire est prévu pour la stabilisation des degrés de liberté axiaux (26) du rotor (13).

8. Anneau selon l'une des revendications précédentes, **caractérisé en ce qu'**un amortissement des oscillations de relaxation est prévu au moyen d'un moyen de compensation (19), dans lequel le moyen de compensation (19) présente au moins une boucle conductrice électrique séparée d'un enroulement.

9. Anneau selon l'une des revendications précédentes, **caractérisé en ce qu'**un palier de secours (20) est prévu, dans lequel le palier de secours (20) est formé à partir d'au moins un bague collectrice fixé au stator (12).

10. Anneau selon l'une des revendications précédentes, **caractérisé en ce que** l'aimant (17) du rotor (13) présente 6 pôles et le stator (12) présente 5 enroulements.

11. Anneau selon l'une des revendications 1 à 8, **caractérisé en ce que** l'aimant (17) du rotor (13) présente 6 pôles et le stator (12) présente 4 à 6 enroulements.

12. Anneau selon l'une des revendications 1 à 8, **caractérisé en ce que** l'aimant (17) du rotor (13) présente 4 pôles et le stator (12) présente 4 enroulements.

13. Métier à filer à anneaux comportant un banc porte-anneaux (9) et au moins un anneau entraîné fixé sur le banc porte-anneaux (9) selon l'une des revendications précédentes.

14. Métier à filer à anneaux selon la revendication 13, **caractérisé en ce qu'**un amortissement d'un palier de l'anneau entraîné est prévu par un élément d'amortissement (23) en matériaux viscoélastiques dans une fixation (18) du stator (12) sur le banc porte-anneaux (9).

15. Métier à retordre à anneaux comportant au moins un anneau entraîné selon l'une des revendications 1 à 12.
